# EUROPEAN PATENT APPLICATION

(11) **EP 3 561 573 A1**
(43) Date of publication of application: **30.10.2019**
(21) Application number: 18757590.7
(22) Date of filing: 26.02.2018
(51) Int. Cl.: G02B 27/01

(54) **VIRTUAL REALITY HEAD-MOUNTED APPARATUS**

(30) Priority: 27.02.2017 CN 201710108671
(71) Applicant: Alibaba Group Holding Limited, Grand Cayman (KY)
(72) Inventor: ZHANG, Hong, Hangzhou Zhejiang 311121 (CN); YIN, Huanmi, Hangzhou Zhejiang 311121 (CN); LIN, Feng, Hangzhou Zhejiang 311121 (CN); WU, Jun, Hangzhou Zhejiang 311121 (CN)
(74) Representative: Branderhorst, Matthijs Pieter Arie
(86) International application number: PCT/CN2018/077282
(87) International publication number: WO 2018/153369

(57) **Abstract**

Provided is a virtual reality head-mounted apparatus, including: an apparatus body (1), the apparatus body (1) being provided with a convex lens (2); infrared light sources (5) provided in the apparatus body (1), the infrared light sources (5) being distributed at a periphery of at least one convex lens (2), and providing infrared light compensation for an eye (4) of a user corresponding to the at least one convex lens (2); and a camera (6) provided in the apparatus body (1), a lens of the camera (6) facing the user eye (4) corresponding to the at least one convex lens (2) and configured to perform infrared image acquisition on physiological feature information of the user eye (4). The virtual reality head-mounted apparatus may provide infrared light compensation for an eye (4) of the user, thereby improving the clarity of an infrared image of the user eye (4) acquired by the camera (6) and the accuracy of physiological feature information thereof.

## Description

### TECHNICAL FIELD

This application relates to the technical field of virtual reality, and in particular, to a virtual reality head-mounted apparatus.

### BACKGROUND

Virtual reality (VR) technology is a technology that comprehensively utilizes a computer graphics system and various control interfaces to generate an interactive three-dimensional interaction environment on a computer to provide users with immersive experience. In related art, a user can wear a VR head-mounted apparatus, such as VR glasses or a VR helmet, or another VR apparatus, to obtain corresponding VR experience.

However, due to unique characteristics of VR scenarios, especially after the user wears the VR apparatus, the remaining space inside the VR apparatus may be very limited and may have very low brightness, so it is difficult to accurately acquire an eye image of the user. That makes it difficult to smoothly complete tasks such as identity recognition, eye tracking, etc.

### SUMMARY

In view of these limitations, this application provides a VR head-mounted apparatus, which may provide infrared light compensation for an eye of a user, thereby improving the clarity of an eye image of the user acquired by a camera and the accuracy of physiological feature information thereof.

To achieve the aforementioned objective, this application provides the following technical solutions.

A first aspect of this application provides a VR head-mounted apparatus, including:
an apparatus body, comprising at least one convex lens and one or more infrared light sources. The one or more infrared light sources are distributed at a periphery of the at least one convex lens, and are configured to provide infrared light compensation for an eye of a user corresponding to the at least one convex lens.

The apparatus body comprises a camera. A lens of the camera faces the eye of the user corresponding to the at least one convex lens and is configured to perform infrared image acquisition on physiological feature information of the eye of the user.

Optionally, the apparatus body comprises two convex lenses, and at least one infrared light source and at least one camera is distributed at a periphery of at least one of the two convex lenses.

Optionally, at least one of the one or more infrared light sources and at least one camera are distributed at a periphery of each of the at least one convex lens in the apparatus body.

Optionally, when one of the at least one convex lens corresponds to a plurality of infrared light sources, the plurality of infrared light sources are uniformly distributed at a periphery of the one of the at least one convex lens.

Optionally, the one or more infrared light sources are installed within a coverage area of a circumscribed rectangle of a corresponding convex lens.

Optionally, the camera is located at a user side of a corresponding convex lens.

Optionally, the camera is located below the corresponding convex lens.

Optionally, the camera is installed in contact with the corresponding convex lens.

Optionally, the apparatus further includes: an apparatus interface provided on the apparatus body. The apparatus interface is electrically connected to an electronic device installed in the apparatus body, and the electronic device is configured to play VR display content.

The camera and the one or more infrared light sources are connected to the apparatus interface through a data line. Upon receiving a switch control instruction transmitted by the electronic device through the apparatus interface and the data line, the camera and the one or more infrared light sources perform a state switching operation in response to the switch control instruction, and the camera is configured to transmit an acquired infrared image to the electronic device through the apparatus interface and the data line.

Optionally, the camera is an infrared radiation camera or a red-green-blue and infrared radiation integrated camera.

As can be seen from the above technical solutions, in this application, by providing infrared light sources in an apparatus body and at a periphery of a convex lens, infrared light compensation may be performed for an eye of a user corresponding to the convex lens. Thus when acquiring an infrared image of the eye of the user by a camera, requirements for other conditions such as an installation angle and a spacing distance of the camera can be relaxed. That facilitates optimized assembly of components of the VR head-mounted apparatus, thereby optimizing space occupation within the VR head-mounted apparatus.

### BRIEF DESCRIPTION OF THE DRAWINGS

FIG. 1 is a side cross-sectional view of a VR helmet provided by an exemplary embodiment of this application.
FIG. 2 is a structural diagram of a VR helmet, observed from a wearer direction, provided by an exemplary embodiment of this application.
FIG. 3 is a schematic diagram of a positional relationship between an infrared light source and a convex lens provided by an exemplary embodiment of this application.
FIG. 4 is a side cross-sectional view of another VR helmet provided by an exemplary embodiment of this application.

### DETAILED DESCRIPTION OF THE INVENTION

In order to further explain this application, the following embodiments are provided, using a VR helmet as an example, to introduce the related structure of a VR head-mounted apparatus of this application.

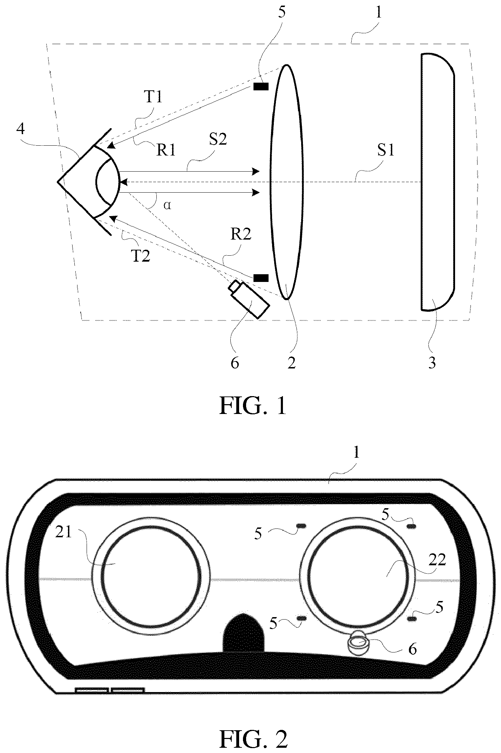

FIG. 1 is a side cross-sectional view of a VR helmet provided by an exemplary embodiment of this application. As shown in FIG. 1, an apparatus body 1 of a VR helmet may comprise a convex lens 2 and a VR playing component 3. The convex lens 2 is located between a user (FIG. 1 shows an eye 4 of the user) and the VR playing component 3 in the apparatus body 1, so that VR display content played by the VR playing component 3 may, in a form of visible light S1, go through the convex lens 2 and propagate to the eye 4 of the user. The eye 4 of the user receives the visible light S1 to view the VR display content.

To perform functions such as eye tracking and iris recognition on a user wearing the VR helmet, an infrared image for the eye 4 of the user needs to be acquired. However, since the VR helmet needs to provide the user with an immersive VR scenario and user experience, the entrance of external light should be minimized, if not eliminated, so it is difficult to satisfy conditions for image acquisition of the eye since light conditions inside the apparatus body 1 are poor after the user wears the VR helmet.

Therefore, the VR helmet of this application further includes infrared light sources 5 provided in the apparatus body 1. The infrared light sources 5 are distributed at a periphery of at least one convex lens 2, and provide infrared light compensation (the infrared light sources 5 emit infrared light such as R1 and R2 to the eye 4) for an eye 4 of a user corresponding to the at least one convex lens 2. As shown in FIG. 2, the VR helmet is usually configured with two convex lenses 2 corresponding to the eyes of a user. The infrared light sources 5 may be distributed at a periphery of a single convex lens 2. For example, the infrared light sources may be distributed at a periphery of a right convex lens 22 in FIG. 2 to provide infrared light compensation for the right eye of the user, and not distributed at a periphery of a left convex lens 21.

Then, when the camera 6 inside the apparatus body 1 in the VR helmet performs image acquisition on physiological feature information of the eye 4 of the user, the infrared light sources 5 may provide infrared light compensation for the eye 4 to ensure that the eye 4 can reflect sufficient infrared light S2, which may be captured by the camera 6 to obtain a clear infrared image. Thus the physiological feature information of the eye 4, such as an eyeball position and an iris feature, may be accurately extracted to further implement functions such as eye tracking, iris recognition, etc. The camera 6 may be an infrared radiation (IR) camera or a red-green-blue (RGB) and IR integrated camera, which is not limited in this application.

In the aforementioned embodiment, to avoid blocking the VR display content played by the VR playing component 3, that is, to avoid blocking the propagation of the visible light S1, the infrared light sources 5 and the camera 6 need to be placed away from a visible area of the convex lens 2 with respect to the eye 4 of the user (for example, the visible area may be indicated by an upper boundary T1 and a lower boundary T2 as shown in FIG. 1). The infrared light sources 5 are located at a periphery of the convex lens 2, and the camera 6 is usually provided at a top or a bottom of the apparatus body 1, such as a bottom of the apparatus body 1 as shown in FIG. 1, and at a user side (i.e., a left side as shown in FIG. 1) of the convex lens 2.

Further, when acquiring infrared light S2 emitted from the eye 4 using the camera 6, since the camera 6 needs to be placed away from the aforementioned visible range and the eye 4 is basically maintained in a straight-looking state as shown in FIG. 1 during the process of using the VR helmet by the user (i.e., the visible light S2 is propagated substantially horizontally), the camera 6 will form an angle α with the infrared light S2. Then, to avoid severe deformation of the acquired image caused by the angle α being too large, the camera 6 may be disposed in close contact with an edge of the convex lens 2 (in term of at least one of a horizontal distance and a vertical distance). That is, the distance between the camera 6 and the eye 4 (in term of at least one of the horizontal distance and the vertical distance) may be, to the fullest extent possible, increased, thereby minimizing the angle α under the same conditions. Optionally, an angle of the camera 6 may be adjusted within a certain range to adapt to different users using the same VR helmet. During the adjustment, a pupil center of the eye 4 of the user may be, to the greatest extent possible, maintained in a central area of the acquired infrared image to avoid image distortion.

In the aforementioned embodiment, installation positions of the infrared light sources 5 and the camera 6 in the apparatus body 1 may be related to each other. For example, as shown in FIG. 2, when the infrared light sources 5 are distributed at a periphery of the right convex lens 22, the camera 6 is located below the right convex lens 22 (or above the right convex lens 22) in a vertical direction, and is located at a central position of the right convex lens 22 in a horizontal direction, so as to reduce or eliminate a horizontal angle between the camera 6 and the eye 4 of the user. In the embodiment shown in FIG. 2, only the right convex lens 22 is provided with the corresponding infrared light sources 5 and camera 6 to perform infrared image acquisition on the right eye of the user, but in fact, there may be other cases: for example, only the left convex lens 21 may be provided with the corresponding infrared light sources 5 and camera 6 to perform infrared image acquisition on the left eye of the user, or the left convex lens 21 and the right convex lens 22 are provided with the corresponding infrared light sources 5 and cameras 6 simultaneously, thereby simultaneously performing infrared image acquisition on the eyes of the user (or the infrared light source 5 and the camera 6 on one side are selectively turned on for infrared image acquisition on a single eye).

Although the embodiment shown in FIG. 2 has four infrared light sources 5 distributed at a periphery of the right convex lens 22, it is only used as an example here. In fact, in the VR helmet of this application, one or more infrared light sources 5 may be distributed at a periphery of each convex lens. This application does not limit a number of infrared light sources 5. When there are a plurality of infrared light sources 5 (e.g., when four infrared light sources 5 are distributed at a periphery of the right convex lens 22 as shown in FIG. 2), these infrared light sources 5 may be, to the fullest extent possible, uniformly distributed to provide uniform light compensation for the eye 4.

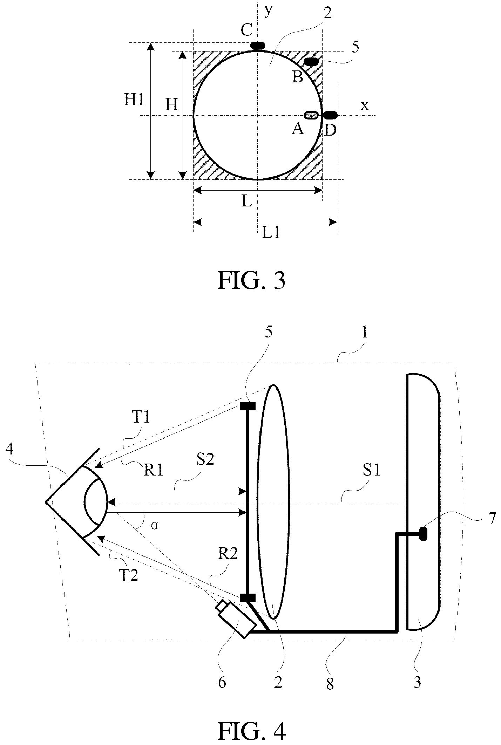

In addition, when the apparatus body 1 comprises the convex lens 2, an external size of the apparatus body 1 is related to the space occupation of the convex lens 2. For example, as shown in FIG. 3, assuming the convex lens 2 has a length of L in a horizontal direction (i.e., x-axis direction in FIG. 3), and a length of H in a vertical direction (i.e., y-axis direction in FIG. 3, when the convex lens 2 is a circle, L and H are equal to a diameter length of the circle). Then, the space occupation of the convex lens 2 for the apparatus body 1 is related to values of L and H. That is, the apparatus body 1 may have a length of at least L in the horizontal direction, and a length of at least H in the vertical direction. In fact, when the apparatus body 1 has a substantially rectangular parallelepiped shape, an external size of the apparatus body 1 required by the convex lens 2 is substantially the same as the external size of the apparatus body 1 required by a circumscribed rectangle of the convex lens 2 (as shown in FIG. 3, the circumscribed rectangle has a horizontal width of L, and a vertical height of H).

In one case, as shown in FIG. 3, when installation positions of the infrared light sources 5 are located within a coverage area of the circumscribed rectangle of the convex lens 2, since the infrared light sources 5 need to avoid blocking the convex lens 2, the infrared light sources 5 should not be located within a coverage area (e.g., point A) of the convex lens 2, but should be located within a shaded area (e.g., point B) shown in FIG. 3. In this case, a space needed by the apparatus body 1 that has the infrared light sources 5 may overlaps with the circumscribed rectangle (or the convex lens 2 itself), so that the infrared light sources 5 do not require additional space for the apparatus body 1. That helps to the control or even reduce the size of the apparatus body 1 and the VR helmet, and prevent the VR helmet from being too bulky and cumbersome.

In another case, as shown in FIG. 3, when an infrared light source 5 is located at point C, an overall height of a combination of the infrared light source 5 and the convex lens 2 in the vertical direction is increased from H to H1. That is, a space occupation requirement for the apparatus body 1 in the vertical direction is increased from H to H1, and the VR helmet becomes thicker. Similarly, when an infrared light source 5 is located at point D, an overall width of a combination of the infrared light source 5 and the convex lens 2 in the horizontal direction is increased from L to L1. That is, a space occupation requirement for the apparatus body 1 in the horizontal direction is increased from L to L1, and the VR helmet becomes wider.

Therefore, to the fullest extent possible, the infrared light sources 5 should be provided within the coverage area of the circumscribed rectangle of the corresponding convex lens 2 to avoid increasing the space occupation requirement for the apparatus body 1, and to help control the external size of the VR helmet.

FIG. 4 is a side cross-sectional view of another VR helmet provided by an exemplary embodiment of this application. As shown in FIG. 4, the VR helmet may be a split-style VR head-mounted apparatus, and the apparatus body 1 of the VR helmet may comprise an apparatus interface 7, so that the apparatus interface 7 may be electrically connected to an electronic device such as a mobile phone or a tablet installed in the apparatus body 1. By using a processor or a graphics card chip, etc. for rendering, and using a screen component for content displaying, the electronic device may work as the VR playing component 3 in the apparatus body 1.

Further, the camera 6 and the infrared light sources 5 in the apparatus body 1 may be connected to the apparatus interface 7 through a data line 8, so that when the electronic device connected to the apparatus interface 7 issues a switch control instruction, the camera 6 and the infrared light sources 5 may receive the switch control instruction through the apparatus interface 7 and the data line 8 to perform a state switching operation in response to the switch control instruction. In other words, based on the user control to the electronic device or an application program running on the electronic device, the electronic device may send a switch control instruction to the camera 6 and the infrared light sources 5, thereby controlling the infrared light sources 5 to provide infrared light compensation for the eye 4 and controlling the camera 6 to provide infrared image acquisition for the eye 4. That improves the controllability of infrared light compensation and infrared image acquisition.

The switch control instruction may be sent to the camera 6 and the infrared light sources 5 simultaneously. Alternatively, the switch control instruction may also be separately sent to the camera 6 or the infrared light sources 5. For example, the instruction may separately control the camera 6 to provide infrared image acquisition, and separately control the infrared light sources 5 to provide infrared light compensation and the like in case of poor light condition.

Additionally, after the camera 6 completes the infrared image acquisition, if the VR helmet comprises a processing module, the acquired infrared image may be transmitted to the processing module for processing. Alternatively, the camera 6 may transmit, through the apparatus interface 7 and the data line 8, the acquired infrared image to the aforementioned electronic device for processing by the electronic device.

It should also be noted that the terms "include", "comprise" and any other variants mean to cover the non-exclusive inclusion. Thereby, the process, method, article, or device which include a series of elements not only include those elements, but also include other elements which are not clearly listed, or include the inherent elements of the process, method, article and device. Without further limitation, the element defined by a phrase "include one......" does not exclude other same elements in the process, method, article or device which include the element.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with this application. Instead, they are merely examples of apparatuses and methods consistent with aspects related to this application as recited in the appended claims.

The terms used in this application are merely for the purpose of describing specific embodiments, and are not intended to limit this application. The terms "a", "said" and "the" of singular forms used in this application and the appended claims are also intended to include plural forms, unless otherwise specified in the context clearly. It should also be understood that, the term "and/or" used herein indicates and includes any or all possible combinations of one or more associated listed items.

It should be understood that although the terms such as first, second, and third may be used herein to describe various information, such information should not be limited to these terms. These terms are merely used for distinguishing information of the same type from each other. For example, within the scope of this application, first information may also be referred to as second information, and similarly, second information may also be referred to as first information. Depending on the context, the term "if' as used herein may be interpreted as "when ..." or "upon ..." or "in response to determining."

The aforementioned descriptions are merely exemplary embodiments of this application, but are not intended to limit this application. Any modification, equivalent replacement, or improvement made without departing from the spirit and principle of this application should fall within the protection scope of this application.

## Claims

1. A virtual reality head-mounted apparatus, comprising:
an apparatus body comprising at least one convex lens and one or more infrared light sources, the one or more infrared light sources being distributed at a periphery of the at least one convex lens, and configured to provide infrared light compensation for an eye of a user corresponding to the at least one convex lens,
and wherein the apparatus body comprises a camera, a lens of the camera facing the eye of the user corresponding to the at least one convex lens and configured to perform infrared image acquisition on physiological feature information of the eye of the user.

2. The apparatus according to claim 1, wherein the apparatus body comprises two convex lenses, at least one infrared light source and at least one camera being distributed at a periphery of the at least one of the two convex lenses.

3. The apparatus according to claim 1, wherein at least one of the one or more infrared light sources and at least one camera are distributed at a periphery of each of the at least one convex lens in the apparatus body.

4. The apparatus according to claim 1, wherein when one of the at least one convex lens corresponds to a plurality of infrared light sources, the plurality of infrared light sources are uniformly distributed at a periphery of the one of the at least one convex lens.

5. The apparatus according to claim 1, wherein the one or more infrared light sources are installed within a coverage area of a circumscribed rectangle of a corresponding convex lens.

6. The apparatus according to claim 1, wherein the camera is located at a user side of a corresponding convex lens.

7. The apparatus according to claim 6, wherein the camera is located below the corresponding convex lens.

8. The apparatus according to claim 6, wherein the camera is installed in contact with the corresponding convex lens.

9. The apparatus according to claim 1, further comprising:
an apparatus interface provided on the apparatus body, the apparatus interface being electrically connected to an electronic device installed in the apparatus body, and the electronic device being configured to play virtual reality display content,
wherein the camera and the one or more infrared light sources are connected to the apparatus interface through a data line, and wherein upon receiving a switch control instruction transmitted by the electronic device through the apparatus interface and the data line, the camera and the one or more infrared light sources perform a state switching operation in response to the switch control instruction, and the camera is configured to transmit an acquired infrared image to the electronic device through the apparatus interface and the data line.

10. The apparatus according to claim 1, wherein the camera is an infrared radiation camera or a red-green-blue and infrared radiation integrated camera.
